# EUROPÄISCHE PATENTSCHRIFT

(11) **EP 2 653 996 B1**
(45) Veröffentlichungstag und Bekanntmachung des Hinweises auf die Patenterteilung: **06.07.2016**
(21) Anmeldenummer: 13164252.2
(22) Anmeldetag: 18.04.2013
(51) Int. Cl.: G06K 15/02, B41J 13/00

(54) **Druckverfahren und Druckgerät**
Printing method and printing apparatus
Procédé d'impression et appareil d'impression

(30) Priorität: 20.04.2012 DE 102012103466
(43) Veröffentlichungstag der Anmeldung: 23.10.2013
(73) Patentinhaber: Océ Printing Systems GmbH & Co. KG, 85586 Poing (DE)
(72) Erfinder: Stockmar, Martin, 85586 Poing (DE); Baumgartner, Robert, 85457 Wörth (DE)
(74) Vertreter: Schaumburg und Partner Patentanwälte mbB

(56) Entgegenhaltungen:
- JP-A- H10 320 150
- US-A1- 2003 011 650

## Beschreibung

Die Erfindung betrifft ein Druckverfahren und ein Druckgerät.

Digitale Druckgeräte sind in der Lage, zeilenweise und insbesondere bildpunktweise Informationen individuell zu drucken. Derartige Druckgeräte basieren beispielsweise auf elektrografischen, magnetografischen oder auf Tintenstrahltechniken. Die Druckgeräte sind dabei in der Regel entweder zum Bedrucken von blattförmigen Aufzeichnungsträgern ausgebildet oder zum Bedrucken von bahnförmigen Aufzeichnungsträgern.

Die US 2007/0172270 A1 zeigt ein sogenanntes Einzelblatt-Drucksystem zum Bedrucken von blattförmigen Aufzeichnungsträgern. Die Einzelblätter werden dabei von einem Blattvorrat abgezogen, wahlweise einer von zwei Druckstationen zugeführt, dort bedruckt, das Druckbild anschließend auf dem jeweiligen Blatt fixiert und danach einer Ausgabeeinheit zugeführt.

Beim Bedrucken von Einzelblättern besteht - anders als beim Bedrucken von bahnförmigen Aufzeichnungsträgern - die Anforderung, das Druckbild auf dem jeweiligen Einzelblatt passgenau zu den jeweiligen Kanten des Blattes, die quer zur Papierlaufrichtung bzw. zur Bedruckrichtung liegen, zu positionieren. Dazu ist es notwendig, beim Transport der Einzelblätter in dem Druckgerät dafür Sorge zu tragen, dass die Einzelblätter zu vorgegebenen Zeitpunkten an den jeweiligen Druckstationen ankommen. Um Geschwindigkeitsschwankungen auszugleichen und zu vermeiden, dass zwei Blätter während dem Transport zusammen stoßen oder gar überlappen, wird in den Einzelblatt-Druckgeräten beim Transport der Blätter in der Regel ein gewisser Abstand, ein sogenanntes "gap", vorgesehen.

In der US 7,804,621 B2 ist ein Verfahren und ein System beschrieben, mit dem Blattabstände in einem Einzelblatt-Drucksystem berechnet und überwacht werden können.

In der gegenüber dieser Anmeldung nicht vorveröffentlichten deutschen Patentanmeldung Nr. 10 2011 000 220.0 ist ein digitales Drucksystem beschrieben, bei dem der Druckvorgang so gesteuert wird, dass ein positionsgenauer Druck auf den Aufzeichnungsträger möglich ist, wenn der Aufzeichnungsträger mit variabler Geschwindigkeit an einem Druckkopf vorbei transportiert wird.

In der deutschen Patentanmeldung Nr. 10 2010 037 303.6 der Anmelderin ist ein Verfahren zum punktweisen Ansteuern eines Druckkopfes beschrieben, bei dem Pixeldaten in einem Datensortierspeicher sortiert werden und dann zeilenweise ausgelesen werden zum Ansteuern des Druckkopfes.

In der deutschen Patentanmeldung Nr. 10 2010 037 854.2 der Anmelderin ist ein Verfahren zum Steuern eines Druckvorganges in einem Tintenstrahldruckgerät beschrieben, bei dem zum Drucken einer Druckzeile ein Zeilentakt erzeugt wird und einzelne Druckköpfe individuell mit einem Versatz zum Zeilentakt zum Ausstoßen von brucktinte angesteuert werden.

Das Dokument US2003/011650 erwähnt ein Verfahren zum seitenweise Bedrucken von blattförmigen Aufzeichnungsträgern in einer Druckvorrichtung, bei dem die Aufzeichnungsträger sukzessive nacheinander mindestens einer punktweise ansteuerbaren Druckeinheit jeweils mit einem Blattabstand zu einem vorhergehenden Aufzeichnungsträger in einer Transportrichtung zugeführt werden.

Es ist Aufgabe der Erfindung, eine hohe Druckgeschwindigkeit beim Bedrucken von blattförmigen Aufzeichnungsträgern in einem digitalen Druckgerät zu erreichen.

Diese Aufgabe wird durch die in den unabhängigen Ansprüchen angegebene Erfindung gelöst. Vorteilhafte Ausführungsformen der Erfindung sind in den Unteransprüchen angegeben.

Erfindungsgemäß ist zum seitenweise Bedrucken von blattförmigen Aufzeichnungsträgern in einer Druckvorrichtung vorgesehen, die Aufzeichnungsträger sukzessive nacheinander mindestens einer punktweise ansteuerbaren Druckeinheit jeweils mit einem Blattabstand zu einem vorhergehenden Aufzeichnungsträger in einer Transportrichtung zu zuführen. Weiterhin werden seitenweise strukturierte Dokumenten-Druckdaten einem Rasterprozess unterzogen, bei dem zeilen- und spaltenweise strukturierte Raster-Druckdaten erzeugt werden. Für die Dokument-Druckdaten einer Seite ist jeweils eine vorgegebene Nominal-Anzahl NA von Zeilen vorgesehen. Die Raster-Druckdaten werden sukzessive zeilenweise in einem Druckdaten-Speicherbereich eines elektronischen Speichers abgespeichert. Weiterhin wird in dem Speicher ein Leerzeilen-Speicherbereich für eine nicht mit Druckdaten zu füllende Leerzeile vorgesehen. Die Raster-Druckdaten werden dann sukzessive zeilenweise aus den Druckdaten-Speicherbereich des Speichers ausgelesen und der Druckeinheit zeilenweise zugeführt. Jeweils nach dem Auslesen der Nominal-Anzahl NA von Zeilen aus dem Druckdaten-Speicherbereich wird dann der Leerzeilen-Speicherbereich eine Anzahl LZ mal ausgelesen, wobei LZ eine ganze Zahl größer oder gleich Null ist und abhängig ist vom Blattabstand.

Der Druckdaten-Speicherbereich kann so groß sein, dass er die Daten aller NA Zeilen einer Seite aufnehmen kann. Er kann aber auch kleiner sein. Während dem Druckprozess können Daten bereits gedruckter Zeilen gelöscht werden und in den entsprechenden Speicherbereich Daten nachfolgender Zeilen derselben Seite abgespeichert werden. Der Speicher kann dann vorzugsweise als Ringspeicher ausgebildet sein.

Der elektronische Speicher kann beispielsweise aus einer hardwaretechnischen Speichereinheit, z.B. einem SRAM-Speichermodul, bestehen oder aus mehreren Speichereinheiten, deren Speicherverwaltungen zusammenwirken. Der Speicher ist insbesondere als Bildspeicher ausgebildet, bei dem Bildpunkte in einer Bit-Kodierung als sogenannte Bitmaps bildpunktweise gespeichert werden können.

Die Erfindung beruht auf der Erenntnis, dass durch das fortwährende sukzessive Auslesen des Druckdaten-Speicherbereichs eine Ring-Speicheranordnung geschaffen werden kann, durch die sukzessive nacheinander die Zeilendaten sämtlicher Seiten abgearbeitet werden können. Die Erfindung beruht weiterhin auf der Erkenntnis, dass durch Schaffung eines vom Druckdaten-Speicherbereichs unabhängig verwalteten und angesteuerten Leerzeilen-Speicherbereichs zwischen der letzten Druckdatenzeile einer ersten Seite und der ersten Druckdatenzeile einer nachfolgenden Seite mit sehr geringem Steuerungsaufwand eine beliebige und insbesondere variable Anzahl von Zwischenzeilen eingefügt werden kann und dadurch ein positionsgenauer und vollständiger Druck aller Druckdaten auf den aufeinander folgenden blattförmigen Aufzeichnungsträgern ermöglicht wird. Weiterhin beruht die Erfindung auf der Erkenntnis, dass mit einem derartigen Verfahren im gesamten Druckprozess lediglich an einer Stelle Leerzeilen eingefügt werden müssen, wobei dies variabel und mit geringem Aufwand möglich ist und wobei die übrigen Datenverarbeitungs-Steuerungsprozesse, insbesondere die Ansteuerung auf Seiten der Druckeinheit nicht weiter verändert werden muss.

Gemäß einem vorteilhaften Ausführungsbeispiel der Erfindung ist vorgesehen, dass der Druckdaten-Speicherbereich als Ringpuffer mit einer Speicher-Anfangsadresse und einer Speicher-Endadresse derart verwendet wird, dass Daten in der selben Reihenfolge ausgelesen werden wie sie gespeichert wurden und sowohl beim Speichern und als auch beim Auslesen von Daten bei Erreichen der Speicher-Endadresse der jeweilige Schreib- oder Lesezugriff an der Speicher-Anfangsadresse fortgesetzt wird. Auf den Leerzeilen-Speicherbereich wird dem gegenüber unabhängig von den Schreib- und Lesezugriffen des Ringspeichers zugegriffen.

Das Beschreiben und Auslesen des Speichers kann insbesondere mit einer Adress-Steuerung gesteuert werden, die die jeweiligen Zugriffe auf den Ringpuffer und den Leerzeilen-Speicherbereich derart koordiniert, dass während Phasen, in denen kein Aufzeichnungsträger zum Bedrucken an der Druckeinheit anliegt, einerseits in unveränderten Zeilenschema Rasterdruckdaten in den Ringpuffer gespeichert und von diesen gelesen werden können und anderseits die Leerzeilen-Daten des Leerzeilen-Speicherbereichs an die Druckeinheit ausgegeben werden.

Sowohl das Speichern in die jeweiligen Speicherbereiche als auch das Auslesen von Daten aus den jeweiligen Speicherbereichen erfolgt insbesondere kontinuierlich und/oder in einer Taktfrequenz, die der Druckgeschwindigkeit der Druckeinheit angepasst ist.

Weiterhin vorteilhaft kann die Adress-Steuerung eine Zeilenadress-Einheit und einen Zeigerspeicher verwenden, in dem Zeigerspeicher jeweils Speicheradressen des Speichers gespeichert werden, die den Anfang der Daten einer Druckzeile markieren. Die Zeilenadress-Einheit kann einen Zähler umfassen. Dabei kann im Zähler zuerst eine Ausgangs-Speicheradresse des Zeigers Speicher gespeichert werden, die den Anfang der Daten zu einer Anfangs-Düsenreihe der Druckeinheit markiert. Zum Drucken können Daten aus dem Druckdaten-Speicher jeweils an einer Adresse ausgelesen werden, die aus der Ausgangs-Speicheradresse abzüglich eines vorgegebenen Versatzwertes ermittelt wird.

Mittels eines Subtrahierers kann nach jedem Druckvorgang einer Druckzeile der Zähler um eine vorgegebene Anzahl, z.B. um eins erniedrigt werden, bis der Zähler einen vorgegebenen Wert, insbesondere NA-1, erreicht. Dann kann der Zähler wieder auf Null gesetzt werden.

Weiterhin kann vorteilhaft vorgesehen sein, zur Bestimmung der Anzahl auszugebender Leerzeilen LZ den Blattabstand zwischen zwei aufeinanderförmigen blattförmigen Aufzeichnungsträgern während deren Transport zu messen und/oder einem einstellbaren Parameter vorzusehen.

Die Erfindung erlaubt es, die Lese- und/oder Schreibzugriffe auf die im Ringpuffer gespeicherten Druckdaten von den Lesezugriffen auf den Speicherbereich, in dem die leere Zeile gespeichert ist, zu entkoppeln, d.h. die Lese/Schreibprozesse des Ringpuffers, nachfolgend auch Ringspeicher genannt, bei Bedarf für eine variabel, lange Zeit zu unterbrechen und während dieser Zeit, d.h. um eine variable Anzahl die Information "LEER", z.B. den Wert Null für alle Bildpunkte der leeren Zeile auszugeben.

Wenn die Leerzeile in derselben Bildspeichereinheit abgespeichert ist wie die Raster-Druckdaten, dann kann diese Bildspeichereinheit Ressourcen schonend im Prozess zur Bereitstellung der Ansteuerdaten für den Druckkopf für beide Aufgaben genutzt werden, d.h. einerseits für die Zwischenspeicherung eingehender Druckdaten und andererseits für das bedarfsgerechte Einfügen von leeren Zeilen in die ausgabeseitigen Ansteuerdaten für einen positionsgenauen Druck auf aufeinanderfolgende blattförmige Aufzeichnungsträger.

Weiterhin ist es mit der Erfindung prinzipiell möglich, beliebig viele Zeilensignale mit dem Wert NULL in die ausgabeseitigen Ansteuersignale einzufügen. Die entsprechende Steuerung kann beispielsweise über die Adress-Steuerung für den Bildspeicher erfolgen, wobei entsprechende Eingangsgrößen wie Geräteeinstellungen für den Blattabstand oder ein sensorisch gemessener physikalischer Blattabstand an einer vorgegebenen Stelle des Transportweges der Aufzeichnungsträgers für die Adressteuerung und damit zur Festlegung der Anzahl eingefügter Leerzeilen genutzt werden können.

Mit der Erfindung kann auch erreicht werden, dass seitens eines Druckkopfes keine weiteren Veränderungen an der Ansteuerung notwendig sind um dafür zu sorgen, dass alle zusammen gehörigen Druckdaten einer Dokumentenseite auf einer gemeinsamen Seite eines Aufzeichnungsträgers gedruckt werden. Am Druckkopf kommen kontinuierlich Daten an, unabhängig davon, ob ein bedruckbares Blatt am Druckkopf anliegt oder nicht. Die beschriebene Steuerung schickt in der Phase, in der kein Aufzeichnungsträger am Druckkopf anliegt, mit unveränderter, einer bestimmten Druckauflösung und Blatttransportgeschwindigkeit entsprechender Taktrate automatisch eine bestimmte Anzahl an Leerzeilen-Daten an den Druckkopf.

Demzufolge kann erreicht werden, dass keine Daten im Druckprozess dadurch verloren gehen, dass sie am Druckkopf anliegen, während sich an dem Druckkopf gerade ein Zwischenraum zwischen zwei aufeinander folgenden Aufzeichnungsträger-Blättern befindet, d.h., kein Umdruck auf ein Blatt erfolgen kann. Weiterhin kann dadurch erreicht werden, dass zusammengehörige Druckdaten einer Seite vom Druckkopf nicht fehlerhaft auf verschiedene, insbesondere aufeinanderfolgende Blätter gedruckt werden.

Mit der Erfindung können auch komplexe Druckkopf-Anordnungen mit z.B. mehreren tausenden bis zig tausenden von Tintendüsen und teilweise überlappenden, versetzt zueinander angeordneten Druckköpfen so sicher angesteuert werden, dass vollständige Druckbilder auf den Einzelblättern erzeugt werden, Daten nicht unbeabsichtigt auf ein falsches Blatt gedruckt werden und zwischen aufeinanderfolgenden Blättern lediglich relativ kleine Zwischenräume eingehalten werden müssen. Dadurch wird die Produktivität (Druckleistung pro Zeiteinheit) eines entsprechend ausgestatteten Druckgeräts erhöht.

Im Rahmen der Erfindung werden auch eine Steuereinrichtung für eine Druckeinheit, ein Druckgerät und ein Computerprogrammprodukt vorgeschlagen, mit denen das erfindungsgemäße Verfahren ausführbar ist.

Weitere Vorteile und Ausführungsbeispiele der Erfindung werden nachfolgend anhand von Figuren beschrieben.

Es zeigen:
- Figur 1:: Ein Drücksystem
- Figur 2:: Einen Druckriegel
- Figur 3:: Eine Speicherverwaltung und
- Figur 4:: Eine Speicherverwaltung zum Einfügen von Leerzeilen.

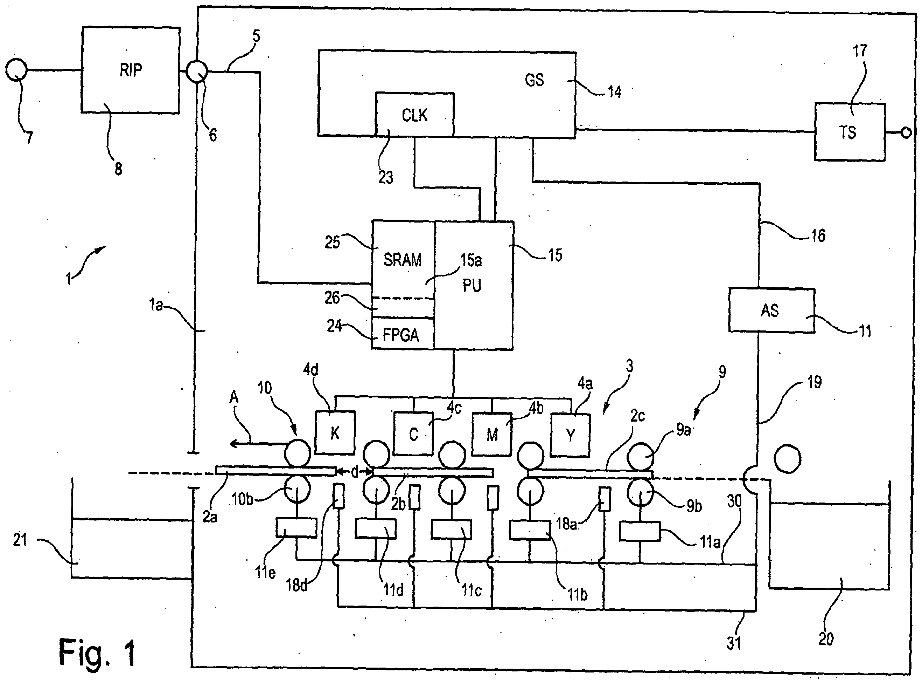

In Figur 1 ist ein Drucksystem 1 gezeigt, bei dem in einem digitalen Druckgerät la Papierblätter 2a, 2b, 2c entlang einer Transportrichtung A an einer gerätefesten Druckkopfanordnung 3 vorbeigeführt werden. Sie weist vier Druckriegel 4a...4d für die Farben Gelb (Y), Magenta (M), Cyan (C) und Schwarz (K), auf, die die vorbei geführten Papierblätter 2a, 2b, 2c punkt- und zeilenweise mittels Tintenstrahltechnik farbauszugsweise bedrucken.

Die Druckkopfanordnung 3 empfängt von einer Druckkopf-Steuer-Schaltung 15 Steuersignale und die über eine Druckdaten-Leitung 5 Druckdaten. Die Druckdatenleitung 5 führt zu einer Schnittstelle 6, über die dem Druckgerät la punktweise gerasterte Bilddaten von einem Rasterbildprozessor (Raster Image Processor, RIP) 8 zugeführt werden. Der Rasterbildprozessor 8 kann wiederum eingangsseitig über eine Schnittstelle 7 Druckdaten empfangen, beispielsweise codiert in einer bekannten Druckdatensprache wie AFP/IPDS, PPML, PDF, PCL, Post Script und so weiter.

In der Steuerschaltung 15 werden die vom Rasterprozessor 8 empfangenen, bildpunktweise gerasterten Druckdaten in Ansteuersignale für die Druckkopf-Anordnung 3 umgewandelt. Dabei können Verfahren und Steuerkomponenten eingesetzt werden, die in den eingangs genannten deutschen Patentanmeldungen Nr. 10 2010 037 303.6 und 10 2010 037 854.2 genannt sind. Der Inhalt dieser Patentanmeldungen wird deshalb an dieser Stelle nochmals in Bezug genommen.

Im Druckgerät la werden die Papierblätter 2a, 2b, 2c mittels eines Antriebssystems transportiert, das wenigstens eine Antriebssteuerung 11, eine eingangsseitig angetriebenen Rolle 9a und eine ausgangsseitig angetriebene Rollo 10b umfasst. Die Papierblätter 2a...2c werden zum Bedrucken von einem Papierstapel in einer Blatteinzugsvorrichtung 20 abgezogen und nach dem Drucken in einer Blattablage 21 abgelegt.

Die Papierblätter 2a, 2b, 2c werden den Druckköpfen 4a...4d jeweils sukzessive nacheinander zugeführt, wobei sie einen Abstand zueinander haben. Der Abstand d kann, wie in Figur 1 gezeigt, zwischen zwei Papierblättern jeweils über die gesamte Transportphase durch die Druckkopfanordnung 3 gleich sein oder auch druckkopfindividuell verschieden eingestellt sein.

Das Druckgerät weist weiterhin eine Gerätesteuerung 14 auf, an die mehrere Untereinheiten (Submodul-Steuerungen) angeschlossen sind, beispielsweise über eine Leitung 16 eine Antriebssteuerung 11 für den Transport der Papierblätter 2a, 2b, 2c, eine Steuerung 17 für eine Trocknungseinrichtung zum Trocknen bzw. Fixieren der gedruckten Tinte auf den Papierblättern 2a, 2b, 2c usw. Eine Uhr 23 sendet hochfrequente Taktsignale aus, die von allen an der Gerätesteuerung 14 angeschlossenen, für den Druckprozess relevanten Steuerungskomponenten zur Synchronisation verwendet werden können.

Die Antriebssteuerung 11 steuert über Leitung 19 die Antriebe 11a...11e für die Antriebsrollen 9b, 10b etc an. Sie ist dazu über eine Leitung 30 mit diesen verbunden. Gleichzeitig ist sie über eine Leitung 31 mit Blattsensoren, z.B. 18a, 18d, verbunden, die kurz vor den verschiedenen Druckriegeln 4a...4d entlang des Transportweges für die Aufzeichnungsträger angeordnet sind um jeweils den Abstand aufeinanderfolgender Blätter zu detektieren. Der gemessene Blattabstand kann dann über die Antriebssteuerung 11 zur Gerätesteuerung 14 und von dort an die Steuerschaltung 15 für die Druckeinheit gemeldet werden. Dort kann anhand des Blattabstandes dann die Ansteuerung für die Druckriegel 4a...4d entsprechend angepasst werden.

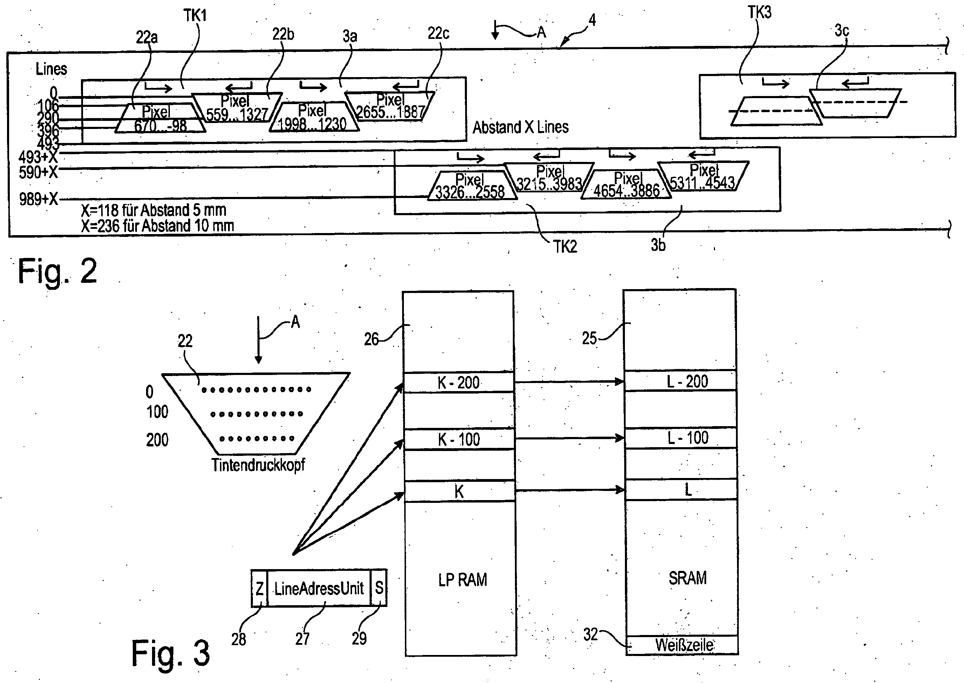

Anhand der Figur 2 wird nachfolgend erläutert welche Problemstellung sich für einen positionsgenauen Druck auf Einzelblätter mittels Tintenstrahldruckköpfen in einem Hochleistungs-Cutsheet Drückgerät ergeben. Für jede Druckfarbe stehen dabei mehrere Tintendruckköpfe zur Verfügung, die in einem sogenannten Druckriegel nebeneinander angeordnet sind und die gesamte Druckbreite überstreichen.

Figur 2 zeigt einen solchen Druckriegel 4 schematisch mit drei Tintendruckköpfen, wobei der Tintendruckkopf links oben mit TK1 bezeichnet wird, der Tintendruckkopf in der Mitte unten mit TK2 und der Tintendruckkopf rechts oben mit TK3 bezeichnet wird. Jeder der Tintendruckköpfe TK1, TK2, TK3 teilt sich weiter in vier Units auf, von denen jede 664 Düsen umfasst, die in 16 Düsenreihen aufgeteilt sind. Beispielsweise weist der Kopf TK1 die Units 22a, 22b, 22c auf.

Die Düsenreihen einer Unit sind jeweils zu einander parallel angeordnet und bilden in ihrer Gesamtheit ein Trapez, wobei die Anzahl der Düsen von 49 bei der längsten Reihe bis zu 34 bei der kürzesten Reihe reicht. Im Druckbetrieb schickt eine Steuerung, beispielsweise die Steuerung 15 (Figur 1), die Druckdaten zu den Druckköpfen TK1, TK2, TK3 und aktiviert über ein Steuersignal alle Düsen in den Tintendruckköpfen TK1, TK2, TK3, die daraufhin entsprechend der zuvor übertragen Druckdaten Tintentropfen ausstoßen.

Anders als bei Laserdruckern, die pro Druckvorgang bzw. Zeilentakt typischerweise immer eine ganze Zeile drucken, erzeugen die Tintendruckköpfe TK1, TK2, TK3 pro Druckvorgang mehrer unvollständige Zeilen auf dem Aufzeichnungträger 2a...2c (der z.B. ein Papierblatt sein kann), die im Laufe der Blattbewegung in dessen Transportrichtung A nach und nach ergänzt werden.

Um eine komplette Zeile zu drucken, muss sich bei der obigen Anordnung der Tintendruckköpfe TK1, TK2, TK3 das Papierblatt um 1107 bzw. 1225 Zeilen fortbewegen. Anders ausgedrückt, bei einem einmaligen Druckvorgang erzeugt ein Tintendruckkopf TK1, TK2, TK3 Punkte auf dem Papierblatt, die in einem Bereich von bis zu 1225 Zeilen verteilt liegen. Dieser Bereich zwischen der ersten Düsenreihe des ersten Druckkopfes und der untersten Düsenreihe des zweiten Druckkopfes wird im weiteren BarArea genannt. Die Zeilenzahl 1107 bzw. 1225 ergibt sich hier aus dem Abstand des Tintendruckkopfs TK1 und TK3, zum Tintendruckkopf TK2. Diese Eigenart des Tintendruckers ist insbesondere am Blattanfang und Blattende zu beachten, um zu gewährleisten, dass nur diejenigen Düsen einen Tropfen erzeugen, unter denen sich auch Papier befindet bzw. die zur Bilderzeugung benötigt werden.

An einem Beispiel mit nur einer Unit soll dies näher erläutert werden. Eine Unit umfasst dabei 16 Düsenreihen, die in der Reihenfolge von 1 bis 16 auf den Zeilen 1, 19, 61, 73, 79, 91, 131, 143, 149, 161, 203, 215, 221, 233, 273 und 291 liegen. Bewegt sich das Papierblatt auf die Unit zu, so erzeugt zuerst die Düsenreihe 1 einen Tropfen in Zeile 1, nach Bewegung des Papiers um 19 Zeilen erzeugen die Düsenreihen 1 und 2 einen Tropfen, nach Bewegung um 61 Zeilen die Düsenreihen 1, 2 und 3, nach 73 Zeilen die Düsenreihen 1 bis 4 usw. bis nach 291 Zeilen alle 16 Düsenreihen einen Tropfen erzeugen. Am Seitenende läuft dieser Vorgang in der umgekehrten Reihenfolge ab. Die Düsenreihe 1 hört als Erste auf zu drucken, gefolgt nach 19 Zeilen von der Düsenreihe 2, bis die Düsenreihe 16 die letzen Pixel der letzten Zeile auf dem Papierblatt erzeugt.

Das gleiche gilt auch für die Anordnung mit drei Tintendruckköpfen. Eine Seite ist erst dann vollständig gedruckt, wenn die Düsenreihe der untersten Unit von Tintendruckkopf TK2 die letzte Zeile der Seite vervollständigt hat.

Druckt ein Cutsheet Printer mit der oben beschriebenen Methode, so muss der Abstand zwischen zwei Seiten mindestens so groß sein wie die Bar Area, also die Anzahl der Zeilen, welche die jeweilige Anordnung der Tintendruckköpfe bei einem einmaligen Druckvorgang bedruckt. Bei einer Auflösung von 600 dpi entspricht dies 46,8 mm bei 1107 Zeilen bzw. 51,8 mm bei 1225 Zeilen. Dieser Abstand bestimmt neben der Papierlaufgeschwindigkeit die maximale Anzahl von Seiten pro Minute, die der Cutsheet Printer drucken kann. Da die Papierlaufgeschwindigkeit aus technischen Gründen nicht beliebig gesteigert werden kann, bleibt als weiterer Optimierungsfaktor nur mehr der Abstand zwischen den Seiten, um die Anzahl der Seiten pro Minute zu erhöhen.

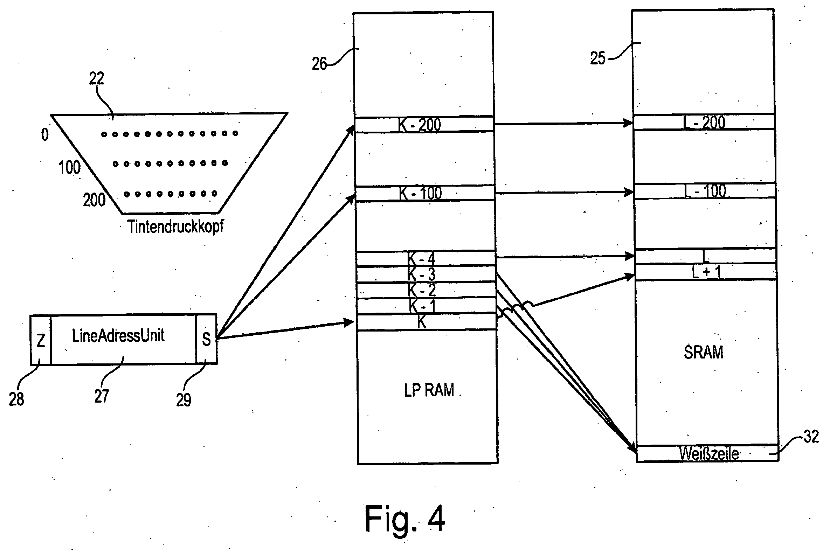

Mit der nachfolgend anhand der Figuren 3 und 4 beschriebennen Methode lässt sich der Seitenabstand verringern und damit die Druckgeschwindigkeit erhöhen. Zum leichteren Verständnis wird dabei von einem Tintendruckkopf 22 ausgegangen, der aus drei Düsenreihen mit einem Anstand von 100 Zeilen besteht, die gemäß ihrem Abstand zueinander als Düsenreihe 0, Düsenreihe 100 und Düsenreihe 200 bezeichnet werden sollen; wobei die Anzahl der Düsen in der Düsenreihe für die Erläuterung irrelevant ist.

Mit einer Druckkopfanordnung, bei der mehrere Druckköpfe und/oder Druckkopfzeilen (z.B. Inkjet-Düsenreihen oder LED-Zeilen) in Papiertransportrichtung zueinander versetzt angeordnet sind, ist gegenüber einer Druckkopfanordnung, bei der nur eine Druckkopfzeile vorgesehen ist, die Ansteuerung im Zwischenraum zwischen aufeinanderfolgenden Papierblättern deutlich schwieriger. Während es bei nur einer Druckkopfzeile relativ leicht möglich ist, die Bildausgabe im Bereich des Zwischenraums zu verhindern, beispielsweise durch ein Verfahren, bei dem die Bildausgabe während des Vorbeilaufs des Zwischenraums unterbrochen wird, kann dies in einer Anordnung mit den zueinander versetzten Druckkopfzeilen nicht ohne weiteres erfolgen, weil dabei die Bildpunkte zu einer gedruckten Bildzeile aus verschiedenen, zueinander versetzten Druckkopfzeilen stammen. Würde man das einfache Verfahren auf eine solche Anordnung übertragen wollen, dann müßte für jede einzelne Druckdüse festgelegt werden, wann ihr Druckvorgang unterbrochen wird. Nachfolgend wird ein erfindungsgemäßes Verfahren beschrieben, mit dem diese Schwierigkeit überwunden werden kann, wobei der steuerungstechnische Aufwand vorteilhaft gering gehalten werden kann.

Wie bereits zuvor beschrieben und in Figur 3 näher gezeigt druckt die Düsenreihe 0 die ersten Pixel auf das Papierblatt und die Düsenreihe 200 die letzen Pixel einer Seite. Das Papierblatt bewegt sich also von der Düsenreihe 0 in Richtung Düsenreihe 200 in Richtung A.

Eine Steuerungseinheit, die die Tintendruckköpfe ansteuert, beispielsweise die in der Figur 1 gezeigte Einheit 15 umfasst beispielsweise einen programmierbaren Logikbaustein (Field Programmable Gate Array, FPGA) und einen, dazu externen, flüchtigen, elektronischen Halbleiterspeicher 15a, der aus einem oder mehreren SRAM (Static Random Access Memory) Bausteinen aufgebaut ist und in dem in einem ersten Speicherbereich 25 gerasterte Bilddaten (bitmaps) gespeichert werden können (Figuren 1, 3 und 4).

Anhand der Figuren 3 und 4 wird nun der Speicherverwaltungsprozess genauer beschrieben. Der erste Speicherbereich 25 des externen Speichers 15a, im weiteren PixelRAM genannt, nimmt die zu druckenden Zeilendaten auf, die die Steuerschaltung 15 über die Verbindung 5 empfängt (Figur 1). Der Speicherplatz im PixelRAM 25 umfasst n + 1 Zeilen, wobei für die Speicherung der Druckzeilen n Zeilen zur Verfügung stehen, die (n +1).te Zeile stellt die sogenannte Weißzeile 32 dar, d.h. die Daten in dieser Zeile enthalten die Codierung für weiße Bildpunkte, beispielsweise den Wert NULL.

Im FPGA 24 ist eine Steuerungslogik zur Prozesssteuerung implementiert, die alternativ auch mit einem Computerprogramm realisierbar ist, das auf einem Computer geladen und ausgeführt werden kann. Im FPGA 24 befindet sich ein weiterer Speicher 26, das LinePointerRAM (LPRAM), das die Anfangsadressen der Zeilen im PixelRAM 25 enthält. Diese Adressen lädt die Steuerung des FPGA 24 in der Initialisierungsphase der Steuerschaltung 15, nachfolgend auch Controllerboards genannt, in einen zweiten Speicherbereich des Speichers 15a, das LinePointerRAM 26, wobei der erste Eintrag auf die erste Zeile im PixelRAM 25 zeigt, der zweite Eintrag auf dessen zweite Zeile usw. Jede Adresse ergibt sich aus der vorhergehenden Adresse plus die Zeilenlänge. Die Adresse des LinePointerRAMs 26 wird in einer Zeilenadressiereinheit 27, auch LineAddressUnit genannt, erzeugt, die einen Zähler 28 und einen Subtrahierer 29 umfasst.

Der Zähler 28 enthält die jeweilige Adresse der 0-ten Düsenreihe im LinePointerRam 26, in diesem Beispiel K genannt. Nach jedem Druckvorgang inkrementiert die Steuerung 15 den Zähler um Eins. Erreicht der Zähler den Wert n -1, setzt die Steuerung 15 ihn auf Null zurück. Diese Art der Adressgenerierung sorgt dafür, dass das PixelRAM 25 als Ringspeicher wirkt. Die Adresse im LinePointerRAM 26 stellt die Anfangsadresse der dazugehörenden Zeile L im PixelRam 25 dar. Anhand dieser Adresse transferiert die Steuerung 15 die Pixel vom PixelRAM 25 in das FPGA 24, um sie dort für den Druckvorgang aufzubereiten. Für die beiden anderen Düsenreihen des Tintendruckkopfes wird vom Zählerwert K einmal ein Versatzwert 100 bzw. 200 abgezogen und auf diese Weise die korrespondierende Zeile L - 100 bzw. L - 200 adressiert. Fällt das Ergebnis der Subtraktion negativ aus, ist K also kleiner 100 bzw. 200 ist, so wird in diesem Fall statt K - 100 der Wert n -1 + K - 100 berechnet. Dies entspricht dem Übergang des Zählers in der LineAddressUnit 27 von n - 1 auf Null.

Innerhalb der ersten Druckdaten-Seite inkrementiert die Steuerung 15 nur den Zähler 28 in der LineAddressUnit 27. Dies ändert sich aber am Seitenende, wenn ein Zwischenraum (beispielsweise zwischen zwei aufeinanderfolgenden Papierblättern) unbedruckt bleiben soll. Der Wert K im Zähler der LineAddressUnit 27 zeigt nun auf die letzte Zeile in der Seite, die Zeile L im PixelRAM 25. Liegen die zu druckenden Seiten nahtlos aneinander so genügt es, nur den Zähler auf K + 1 zu inkrementieren, um damit die Zeile L + 1, also die erste Zeile der neuen Seite, adressieren zu können. Im Fall eines gewünschten Zwischenraums, wenn beispielsweise zwei aufeinanderfolgende Papierblätter.an einem Druckriegel den Abstand d voneinander haben (Figur 1), dann veranlasst die Steuerung 15 den Druck weißer Zeilen in diesem Bereich. Die Steuerung 15 trägt dazu nach der Inkrementierung des Zählers in die Speicherzelle K + 1 des LinePointerRAMs 26 die Adresse der Weißzeile 32 ein. Anstelle der Pixel aus der Zeile L + 1 holt die Steuerung 15 aus dem PixelRAM 25 für die nächste Zeile weiße Pixel. Weiße Pixel bedeuten, dass der Tintendruckkopf keinen Tintentropfen generiert. Zusätzlich merkt sich die Steuerung 15 die Anfangsadresse der Zeile L + 1 im PixelRAM 25. Bis auf die Speicherung der Adresse der (L + 1).ten Zeile wiederholt sich dieser Vorgang für jede Zeile des Bereichs zwischen den zu druckenden Seiten. Nach der letzen Zeile des gewünschten Zwischenraums inkrementiert die Steuerung 15 wie zuvor den Zähler in der LineAddressUnit 27, trägt aber in das LinePointerRAM 26 nicht die Adresse der Weißzeile 32 ein, sondern die Adresse der Zeile L + 1, also der ersten Zeile der neuen Seite, welche die Steuerung 15 zuvor zwischengespeichert hat.

Das folgende Beispiel geht von einem Abstand von drei Zeilen zwischen den zu bedruckenden Blättern aus. Abbildung 3 zeigt den Zustand vier Zeilen nach der letzten Zeile des ersten Blattes. Entsprechend dem Abstand von drei Zeilen zwischen den beiden Blättern zeigt der Eintrag <K - 1> bis <K - 3> im LinePointerRAM 26 auf die Weißzeile 32. Im Eintrag <K> steht der am Ende der vorhergehenden Seite gespeicherte Wert, der auf die Zeile L + 1 im PixelRAM 25 zeigt, also die erste Zeile der zweiten Seite. Ab diesem Zeitpunkt trägt die Steuerung in das LinePointerRAM 26 in die Zelle, auf die der Zähler in der LineAddressUnit 27 zeigt, den Wert der davorliegenden Zelle plus die Länge der Zeile im PixelRAM 25 ein. Hier gilt dasselbe wie für die Adressberechnung in der LineAddressUnit 27. Bei dem nten Eintrag im LinePointerRAM 26 muß die Steuerung 15 statt dem Vorgängerwert plus die Zeilenlänge die Adresse der ersten Zeile im PixelRam 25 eintragen, die normalerweise auf Null liegt. Dieser Vorgang setzt sich bis zum Ende der Seite fort und überschreibt damit automatisch die Einträge für die Weißzeile 32 im LinePointerRAM 26.

Die Anzahl der weißen Zeilen zwischen den einzelnen Seiten lässt sich entweder fest über einen internen Parameter oder über ein Register vorgeben. Es kann auch vorgesehen sein, dass ein externes Signal die Steuerung veranlasst, das Einfügen von weißen Zeilen zu beenden. Das Signal kann beispielsweise von Sensorwerten der Blattabstandssensoren 18a, 18d (Figur 1) abgeleitet werden.

Der FPGA 24 ist eine Steuereinrichtung. Zur Konfiguration des FPGAs 24 können Computerprogramme verwendet werden. Solche Konfigurationsprogramme bzw. -programmteile sind Computerprogrammprodukte im Sinne der Erfindung. Erfindungsgemäße Computerprogramme bzw. Computerprogrammprodukte können aber genauso gut in ein herkömmliches, mit einem Prozessor, Arbeitsspeicher, ggf. Netzwerkkarte usw. ausgestattetes Computersystem geladen werden und dort ablaufen. Sie können auf einem digitalen Datenträger, z.B. auf einer DVD-ROM, gespeichert sein, oder als Dateien über ein Computernetzwerk ausgetauscht bzw. von einem anderen Computer, z.B. einem Server herunter geladen werden.

### Bezugszeichenliste

- 1: Drucksystem
- la: Druckgeräte
- 2a...2c: Papierblatt
- 3: Druckkopfanordnung.
- 4, 4a...4d: Druckriegel
- 5: Druckdatenleitung
- 6: Schnittstelle
- 7: Schnittstelle
- 8: Rasterbildprozessor
- 9: Eingangsrollenpaar
- 9a: frei laufende Rolle
- 9b: angetriebene Rolle
- 10: Ausgangsrollenpaar
- 10b: angetriebene Rolle
- 11: Antriebssteuerung
- 11a...11e: Antrieb
- 12: Encoder
- 13: Schlepp-Puls-Schaltung
- 14: Gerätesteuerung.
- 15: Steuerschaltung für Druck-Einheit
- 15a: Speicher
- 16: Trockner-Leitung
- 17: Trockner-Steuerung
- 18a, 18d: Blattsensor
- 19: Antriebs-Leitung
- 20: Blatteinzugsvorrichtung
- 21: Blattablage
- 22: Tintendruckkopf
- 22a, 22b, 22c: Units
- 23: Taktgeber
- 24: FPGA
- 25: Speicher PixelRam
- 26: Speicher LinePointerRam
- 27: Zeilenadressiereinheit (LineAddressUnit)
- 28: Zähler
- 29: Subtrahierer
- 30: Antriebs-Leitung
- 31: Sensor-Leitung
- 32: Weißzeile
- A:: Papiertransportrichtung
- d:: Blattabstand
- TK1, TK2, TK3: Tintendruckkopf

## Patentansprüche

1. Verfahren zum seitenweisen Bedrucken von blattförmigen Aufzeichnungsträgern (2a...2c) in einer Druckvorrichtung (1a), bei dem die Aufzeichnungsträger (2a...2c) sukzessive nacheinander mindestens einer punktweise ansteuerbaren Druckeinheit (4a...4d) jeweils mit einem Blattabstand (d) zu einem vorher gehenden Aufzeichnungsträger (2a...2c) in einer Transportrichtung (A) zugeführt werden, wobei
- seitenweise strukturierte Dokumenten-Druckdaten einem Rasterprozess unterzogen werden, bei dem zeilen- und spaltenweise strukturierte Raster-Druckdaten erzeugt werden,
- für die Dokumenten-Druckdaten einer Seite jeweils eine vorgegebene Nominal-Anzahl NA von Zeilen vorgesehen ist,
- die Raster-Druckdaten in einem Druckdaten-Speicherbereich (25) eines elektronischen Speichers (15a) sukzessive zeilenweise abgespeichert werden,
- in dem Speicher (15a) ein Leerzeilen-Speicherbereich (32) für eine nicht mit Druckdaten zu füllende Leerzeile vorgesehen wird,
- die Raster-Druckdaten sukzessive zeilenweise aus dem Druckdaten-Speicherbereich (25) des Speichers (15a) ausgelesen und der Druckeinheit (4a...4d) zeilenweise zugeführt werden und
- jeweils nach dem Auslesen der Nominal-Anzahl NA von Zeilen aus dem Druckdaten-Speicherbereich (25) der Leerzeilen-Speicherbereich (32) eine Anzahl LZ mal ausgelesen wird, wobei LZ eine ganze Zahl größer oder gleich Null ist und abhängig ist vom Blattabstand (d).

2. Verfahren nach Anspruch 1, wobei
- der Druckdaten-Speicherbereich (25) als Ringpuffer mit einer Speicher-Anfangsadresse und einer Speicher-Endadresse derart verwendet wird, dass Daten in derselben Reihenfolge ausgelesen werden wie sie gespeichert wurden und sowohl beim Speichern als auch beim Auslesen von Daten bei Erreichen der Speicher-Endadresse der jeweilige Schreib- oder Lesezugriff an der Speicher-Anfangsadresse fortgesetzt wird und
- auf den Leerzeilen-Speicherbereich (32) unabhängig von den Schreib- und Lesezugriffen des Ringpuffers (25) zugegriffen wird.

3. Verfahren nach Anspruch 2, wobei das Beschreiben und das Auslesen des Speichers (15a) mit einer Adress-Steuerung (27, 28) gesteuert wird, die die jeweiligen Zugriffe auf den Ringpuffer (25) und auf den Leerzeilen-Speicherbereich (32) derart koordiniert, dass während Phasen, in denen kein Aufzeichnungsträger (2a...2c) zum Bedrucken an der Druckeinheit (4...4d) anliegt, einerseits in unverändertem Zeilenschema Raster-Druckdaten in den Ringpuffer (25) gespeichert und von diesem gelesen werden können und andererseits die Leerzeilen-Daten des Leerzeilen-Speicherbereichs (32) an die Druckeinheit (4a...4d) ausgegeben werden.

4. Verfahren nach Anspruch 3, wobei die Adress-Steuerung (27, 28) eine Zeilenadress-Einheit (27) und einen Zeigerspeicher (26) verwendet, wobei
- im Zeigerspeicher (26) jeweils Speicheradressen des Druckdaten-Speicherbereichs (25) gespeichert werden, die den Anfang der Daten einer Druckzeile markieren und
- die Zeilenadress-Einheit (27) einen Zähler (28) umfasst, wobei im Zähler (28) eine Ausgangs-Speicheradresse (K) des Zeigerspeichers (26) gespeichert wird, die den Anfang der Daten zu einer Anfangs-Düsenreihe der Druckeinheit (4a...4c) markiert.

5. Verfahren nach Anspruch 4, wobei zum Drucken Daten aus dem Druckdaten-Speicherbereich (25) jeweils an einer Adresse ausgelesen werden, die aus der Ausgangs-Speicheradresse (K) abzüglich eines vorgegebenen Versatzwertes ermittelt wird.

6. Verfahren nach einem der vorhergehenden Ansprüche, wobei zur Bestimmung der Anzahl LZ der Blattabstand (d) zwischen zwei aufeinander folgenden blattförmigen Aufzeichnungsträgern (2a...2c) während deren Transport gemessen wird und/oder ein einstellbarer Parameter vorgesehen ist.

7. Steuereinrichtung für eine Druckeinheit, die ausgebildet ist zum Durchführen eines Verfahrens nach einem der vorhergehenden Ansprüche.

8. Druckgerät umfassend eine Steuereinrichtung (15) nach Anspruch 7.

9. Computerprogrammprodukt, das beim Laden und Ausführen auf einem Computer ein Verfahren nach einem der Ansprüche 1 bis 6 ausführt.

10. Computerprogrammprodukt nach Anspruch 9, bei dem ein Computerprogramm auf einem Datenträger gespeichert ist.

## Claims

1. A method for printing sheet-shaped recording media (2a...2c) page by page in a printing device (1a), in which the recording media (2a...2c) are successively fed to at least one point-wise controllable printing unit (4a...4d) each time with a sheet distance (d) to a preceding recording medium (2a...2c) in a transport direction (A),
wherein
- page-wise structured document print data are subjected to a raster process in which line-wise and column-wise structured raster print data are generated,
- for the document print data of one page, each time a predetermined nominal number NA of lines is provided,
- the raster print data are stored successively line by line in a print data memory area (25) of an electronic memory (15a),
- in the memory (15a), an empty-line memory area (32) is provided for an empty line that is not to be filled with print data,
- the raster print data are read out successively line by line from the print data memory area (25) of the memory (15a) and are fed to the printing unit (4a...4d) line by line, and
- each time after reading out the nominal number NA of lines from the print data memory area (25) the empty-line memory area (32) is read out a number LZ times, wherein LZ is a whole number greater or equal to zero and is dependent on the sheet distance (d).

2. The method according to claim 1, wherein
- the print data memory area (25) is used as a circular buffer with a memory initial address and a memory end address such that data are read out in the same order as they have been stored and both during storing and during the read-out of data the respective write or read access is continued at the memory initial address when the memory end address is reached, and
- the empty-line memory area (32) is accessed independent of the write and read accesses of the circular buffer (25).

3. The method according to claim 2, wherein the writing and the read-out of the memory (15a) is controlled by an address control (27, 28) which coordinates the respective accesses to the circular buffer (25) and to the empty-line memory area (32) such that during phases in which no recording medium (2a...2c) for printing is present at the printing unit (4...4d), on the one hand, in unchanged line schema raster print data can be stored into the circular buffer (25) and can be read out therefrom and, on the other hand, the empty-line data of the empty-line memory area (32) are output to the printing unit (4a...4d).

4. The method according to claim 3, wherein the address control (27, 28) uses a line address unit (27) and a pointer memory (26), wherein
- in the pointer memory (26), each time memory addresses of the print data memory area (25) are stored which mark the beginning of the data of a print line, and
- the line address unit (27) comprises a counter (28), wherein in the counter (28) an initial memory address (K) of the pointer memory (26) is stored which marks the beginning of the data to an initial nozzle row of the printing unit (4a...4c).

5. The method according to claim 4, wherein for printing data are read out from the print data memory area (25) each time at an address which is determined from the initial memory address (K) minus a predetermined offset value.

6. The method according to one of the preceding claims, wherein for determining the number LZ, the sheet distance (d) between two successive sheet-shaped recording media (2a...2c) during their transport is measured and/or a settable parameter is provided.

7. A control device for a printing unit, which is designed to implement a method according to one of the preceding claims.

8. A printing apparatus comprising a control device (15) according to claim 7.

9. A computer program product which, when loaded and executed on a computer, executes a method according to one of the claims 1 to 6.

10. The computer program product according to claim 9, in which a computer program is stored on a data carrier.

## Revendications

1. Procédé d'impression page par page de supports d'enregistrement (2a...2c) en forme de feuilles dans un dispositif d'impression (1a), dans lequel les supports d'enregistrement (2a...2c) sont acheminés successivement l'un après l'autre d'au moins une unité d'impression (4a...4d) pouvant être commandée ponctuellement, avec une distance entre feuilles (d) respective par rapport à un support d'enregistrement (2a...2c) précédent dans une direction de transport (A), dans lequel
- des données d'impression de documents structurées page par page sont soumises à un processus de tramage lors duquel des données d'impression tramées structurées en lignes et en colonnes sont générées,
- pour les données d'impression de document d'une page, il est respectivement prévu un nombre nominal prédéterminé NA de lignes,
- les données d'impression tramées sont successivement stockées ligne par ligne dans une zone de mémoire de données d'impression (25) d'une mémoire électronique (15a),
- une zone de mémoire de lignes vides (32) est prévue dans la mémoire (15a) pour une ligne vide ne devant pas être remplie de données d'impression,
- les données d'impression tramées sont lues consécutivement ligne par ligne depuis la zone de mémoire de données d'impression (25) de la mémoire (15a) et sont acheminées ligne par ligne à l'unité d'impression (4a...4d) et
- après la lecture du nombre nominal NA de lignes depuis la zone de mémoire de données d'impression (25), la zone de mémoire de lignes vides (32) est respectivement lue un nombre LZ de fois, dans lequel LZ est un nombre entier supérieur ou égal à zéro et dépend de la distance entre feuilles (d).

2. Procédé selon la revendication 1, dans lequel
- la zone de mémoire de données d'impression (25) est utilisée en tant que tampon cyclique avec une adresse de début de mémoire et une adresse de fin de mémoire de manière à ce que des données soient lues dans le même ordre que celui dans lequel elles ont été stockées et lorsque l'adresse de fin de mémoire est atteinte, l'accès respectif en écriture ou en lecture à l'adresse de début de mémoire est poursuivi tant lors du stockage que lors de la lecture des données, et
- un accès est effectué à la zone de mémoire de lignes vides (32) indépendamment des accès en écriture et en lecture du tampon cyclique (25).

3. Procédé selon la revendication 2, dans lequel l'écriture et la lecture de la mémoire (15a) sont commandées par une commande d'adresse (27, 28) qui coordonne les accès respectifs au tampon cyclique (25) et à la zone de mémoire de lignes vides (32) de manière à ce que, d'une part, des données d'impression tramées puissent être stockées selon un schéma par lignes non modifié dans le tampon cyclique (25) et puissent être lues depuis celui-ci, et à ce que, d'autre part, les données de lignes vides de la zone de mémoire de lignes vides (32) soient délivrées à l'unité d'impression (4a...4d), pendant les phases lors desquelles aucun support d'enregistrement (2a...2c) à imprimer n'est fourni à l'unité d'impression (4...4d).

4. Procédé selon la revendication 3, dans lequel la commande d'adresse (27, 28) utilise une unité d'adresse de ligne (27) et une mémoire de pointeurs (26), dans lequel
- des adresses de mémoire de la zone de mémoire de données d'impression (25) sont respectivement stockées dans la mémoire de pointeurs (26), celles-ci faisant pointer le début des données sur une ligne d'impression, et
- l'unité d'adresse de ligne (27) comprend un compteur (28), dans lequel une adresse de mémoire de sortie (K) de la mémoire de pointeurs (26) est stockée dans le compteur (28), celle-ci faisant pointer le début des données sur une rangée de buses de début de l'unité d'impression (4a...4c).

5. Procédé selon la revendication 4, dans lequel, pour l'impression, des données sont respectivement lues depuis la zone de mémoire de données d'impression (25) à une adresse qui est déterminée à partir de l'adresse de mémoire de sortie (K) après soustraction d'une valeur de décalage prédéterminée.

6. Procédé selon l'une quelconque des revendications précédentes, dans lequel, pour déterminer le nombre LZ, la distance entre feuilles (d) entre deux supports d'enregistrement (2a...2c) en forme de feuilles consécutifs est mesurée pendant leur transport et/ou il est prévu un paramètre réglable.

7. Dispositif de commande destiné à une unité d'impression, réalisé de manière à mettre en oeuvre un procédé selon l'une quelconque des revendications précédentes.

8. Appareil d'impression comprenant un dispositif de commande (15) selon la revendication 7.

9. Produit de programme d'ordinateur qui, lorsqu'il est chargé et exécuté sur un ordinateur, met en oeuvre un procédé selon l'une quelconque des revendications 1 à 6.

10. Produit de programme d'ordinateur selon la revendication 9, dans lequel un programme d'ordinateur est stocké sur un support de données.
